# EUROPÄISCHE PATENTSCHRIFT

(11) **EP 2 893 258 B1**
(45) Veröffentlichungstag und Bekanntmachung des Hinweises auf die Patenterteilung: **14.02.2018**
(21) Anmeldenummer: 13762096.9
(22) Anmeldetag: 09.09.2013
(51) Int. Cl.: B01D 53/72

(54) **ANLAGE ZUR REGENERATIVEN THERMISCHEN OXIDATION (RTO)**
SYSTEM FOR REGENERATIVE THERMAL OXIDATION (RTO)
INSTALLATION D'OXYDATION THERMIQUE RÉGÉNÉRATIVE (RTO)

(30) Priorität: 10.09.2012 DE 102012108391
(43) Veröffentlichungstag der Anmeldung: 15.07.2015
(73) Patentinhaber: Luft- und Thermotechnik Bayreuth GmbH, 95497 Goldkronach (DE)
(72) Erfinder: HAGEN, Matthias, 95460 Bad Berneck (DE); SCHRICKER, Bernd, 95615 Marktredwitz (DE)
(74) Vertreter: Gauss, Nikolai
(86) Internationale Anmeldenummer: PCT/EP2013/068646
(87) Internationale Veröffentlichungsnummer: WO 2014/037570

(56) Entgegenhaltungen:
- EP-A2- 1 350 552
- WO-A1-93/17289

## Beschreibung

Die vorliegende Erfindung betrifft eine Anlage zur regenerativen thermischen Oxidation (RTO) und ein Verfahren zum Betreiben der Anlage.

Anlagen zur regenerativen thermischen Oxidation (RTO-Anlagen) sind aus dem Stand der Technik bekannt, z. B. aus der DE 34 28 537 A1, der US 3,870,474 oder der EP 0 365 262 A1.

RTO-Anlagen werden beispielsweise verwendet, um lösemittelhaltige Abgase nach dem Prinzip der regenerativen thermischen Oxidation zu verbrennen. Diese eignen sich auch für Abgase mit niedrigen VOC-Konzentrationen ("Volatile Organic Compound" - flüchtige organische Verbindungen). Eine in RTO-Anlagen durchgeführte thermische Abgasreinigung durch Oxidation von Kohlenwasserstoffen arbeitet in der Regel bei Brennkammertemperaturen von 800°C bis 1.000°C. Bei diesen Temperaturen reagieren die Kohlenwasserstoffe spontan mit dem vorhandenen Sauerstoff. Als Oxidationsprodukte ergeben sich daraus Kohlendioxid (CO2) und Wasserdampf (H2O).

In einer RTO-Anlage wird ein mit Schadstoffen beladenes Abgas von einer Emissionsquelle über ein Rohrleitungssystem der RTO-Anlage zugeführt. Das Abgas durchströmt dann einen vorgewärmten Regenerator (Regeneratorkammer) in der RTO-Anlage, welcher mit keramischen Formteilen (Wärmetauscher) gefüllt ist. Das vorgewärmte Abgas gelangt in die Brennkammer, in welcher eine vollständige Oxidation der Schadstoffe erfolgt. Die dabei frei werdende Verbrennungswärme vermindert die erforderliche Brennerleistung proportional zum Schadstoffgehalt. Dadurch ist ab einer bestimmten Schadstoffkonzentration ein autothermer Betrieb möglich, bei dem keine zusätzliche Energie benötigt wird, um die Temperatur in der Brennkammer auf einem für die Oxidation notwendigen Temperaturniveau zu halten. Das gereinigte, heiße Abgas (Reingas) durchströmt dann einen zweiten Regenerator der RTO-Anlage und gibt seinen Wärmeinhalt an dessen Speichermasse (keramisches Formteil - Wärmetauscher) ab, bevor das Reingas über einen Kamin an die Atmosphäre abgegeben wird. Diese Betriebsart kann so lange aufrecht erhalten werden, bis die Vorwärmtemperatur des ersten Regenerators sinkt. Die Strömungsrichtung wird nach einem festgelegten Zeitintervall umgeschaltet, so dass das ungereinigte Abgas (Rohgas) durch den zuletzt vorgewärmten Regenerator in die RTO-Anlage strömt und nach der Oxidation den nächsten Regenerator der RTO-Anlage wieder aufwärmt.

Derartige RTO-Anlagen weisen darüber hinaus einen dritten Regenerator auf, der eingesetzt wird, um zu verhindern, dass beim Umkehren der Strömungsrichtung Schadstoffe ins Reingas gelangen. Dadurch kann der vorherige, immer noch mit Rohgas gefüllte Regenerator über das Spülluftsystem gereinigt werden. Diese RTO-Anlagen erreichen durch den Einsatz von Hochleistungsspeichermassen optimale Wärmerückgewinnungsgrade und die Austrittstemperatur des Reingases kann bei diesen RTO-Anlagen nur geringfügig höher als die Eintrittstemperatur des Rohgases sein.

Es sind auch RTO-Anlagen bekannt, welche zusätzlich einen vierten Regenerator (Regeneratorkammer) aufweisen, in welchem ein so genannter "Online-Burnout" durchgeführt wird. Unter dem "Online-Burnout" wird ein Reinigungsbetrieb einer RTO-Anlage verstanden, in welchem eine Reinigung der Regeneratorkammern durch Verdampfen/Verbrennen von festen und flüssigen Bestandteilen der Schadstoffe erfolgen kann, die sich an den Wärmetauschern und/oder an Komponenten der Anlage (z. B. in den Regeneratorkammern) ablagern. Es handelt sich hier also um einen Reinigungsbetrieb, bei dem der Rohgaseintrittsbereich der RTO-Anlage durch Durchziehen von heißen Brenngasen von organischen Ablagerungen freigebrannt wird, wobei die Abgasreinigungsfunktion der restlichen drei Regeneratorkammern nicht beeinträchtigt wird. Die Funktionen der einzelnen Regeneratorkammern dieser RTO-Anlagen ändern sich beim Umschalten entsprechend, so dass die einzelnen Regeneratorkammern abwechselnd von Rohgas oder Reingas durchströmt werden und in einer der Regeneratorkammern ein "Online-Burnout" durchgeführt werden kann.

Aus WO 93/17289 A1 ist ein Verfahren zum Betreiben einer regenerativen thermischen Oxidations-Anlage bekannt, bei welcher in einer RTO-Anlage mit fünf Kammern jeweils zwei von einem Rohgas und zwei von einem Reingas durchströmt werden. Die darin beschriebene RTO-Anlage ist für sehr große Volumenströme ausgelegt und daher nicht geeignet, wirtschaftlich bei geringeren Volumenströmen betrieben zu werden. Dadurch, dass stets mindestens zwei Kammern der RTO-Anlage von einem Abgas durchströmt werden, müssen die Volumenströme ausreichend groß sein, damit die in den Kammern angeordneten Wärmetauscher genügend Wärme aufnehmen können.

So werden bei bestimmten Anwendungen auch zwei RTO-Anlagen parallel betrieben, wobei der gesamte Abluftvolumenstrom von einer Emissionsquelle diesen RTO-Anlagen zu jeweils 50% zugeführt wird. Dabei sind die beiden RTO-Anlagen so ausgebildet, dass die Hälfte des Abluftvolumenstroms im Wesentlichen dem maximal zu verarbeitenden Volumenstrom der jeweiligen RTO-Anlage entspricht. Dies ist deshalb erforderlich, da ansonsten die Wärmetauscher in den RTO-Anlagen keine ausreichende Wärme von dem Abluftstrom aufnehmen können und der Brennkammer zusätzlich Energie für die regenerative thermische Oxidation zugeführt werden muss. Bei einem Ausfall oder einer Wartung einer der beiden beispielsweise als Drei-Kammer-RTO-Anlagen ausgebildeten Anlagen würde ein erheblicher Abluftvolumenstrom ungereinigt in die Atmosphäre gelangen. Aus diesen Gründen wird normalerweise eine zusätzliche RTO-Anlage vorgesehen, welche nur als Redundanzanlage dient und in einem normalen Betrieb (Normalbetrieb) sich im Standby-Modus befindet. Dies ist mit unnötig hohen Kosten verbunden und wirkt sich auch baulich nachteilig auf solche Systeme aus. RTO-Anlagen werden aber auch bei Anwendungen eingesetzt, bei welchen der zu reinigende Abluftvolumenstrom/Abgasvolumenstrom aufgrund der vorgelagerten (Produktions-) Prozesse einer starken Volumenstromschwankung, bis zu einer Verdoppelung, unterworfen ist. Gerade wenn dieser Volumenstromanstieg nur von relativ kurzer Dauer ist, ist eine zusätzliche RTO-Anlage bzw. eine größere RTO-Anlage nicht wirtschaftlich.

Aufgabe der vorliegenden Erfindung ist es, eine verbesserte Anlage zur regenerativen thermischen Oxidation (RTO) zu schaffen und ein vorteilhaftes Verfahren zum Betreiben einer Anlage zur regenerativen thermischen Oxidation (RTO) bereitzustellen.

Diese Aufgabe wird durch die Ansprüche 1 und 9 gelöst. Vorteilhafte Weiterbildungen der Erfindung sind in den abhängigen Ansprüchen angegeben.

Eine erfindungsgemäße Anlage zur regenerativen thermischen Oxidation (RTO) enthält eine Gruppe von Regeneratorkammern mit mindestens vier Regeneratorkammern.

Die mindestens vier Regeneratorkammern sind über Ventile mit einer Zuführleitung zum Zuführen eines Rohgasstromes und einer Abführleitung zum Abführen eines gereinigten Gasstromes sowie einem Spülsystem verbunden.

Im Sinne der Erfindung wird dabei unter einem Ventil insbesondere auch eine Klappe, eine steuerbare Drossel oder ein einen Durchfluss durch eine Leitung, insbesondere eine Rohrleitung, steuerndes und/oder steuerbar begrenzendes Durchflusssteuerelement, wie es dem Fachmann hinlänglich bekannt ist, verstanden.

Die Anlage weist ferner eine Brennkammer mit einem Brennraum auf, über die die Regeneratorkammern miteinander verbunden sind, und eine Steuerung zum Öffnen und Schließen der Ventile. Der Rohgasstrom wird den Regeneratorkammern dabei abwechselnd zugeführt.

Die Regeneratorkammern enthalten einen Wärmetauscher, der abwechselnd von dem Rohgasstrom und dem gereinigten Gasstrom durchströmt wird. Unter Wärmetauschern werden dabei insbesondere auch poröse und/oder offenporige und/oder mit Kanälen durchzogene und/oder eine strukturierte Oberfläche und/oder eine thermophile Oberfläche aufweisende Wärmespeichermassen oder Wärmespeicherkörper verstanden. Bevorzugte Wärmetauscher, insbesondere Wärmespeichermassen oder Wärmespeicherkörper zeichnen sich durch
- eine spezifische Wärmekapazität cₚ bei 100°C von mindestens 0,7 kJ/(kg K), insbesondere von mindestens 0,8 kJ/(kg K), bevorzugt von mindestens 0,9 kJ/(kg K) und/oder
- eine Wärmespeicherzahl von mindestens 1400 kJ/(m³ K), insbesondere von mindestens 1600 kJ/(m³ K), bevorzugt von mindestens 1900 kJ/(m³ K) und/oder
- einen Wärmeeindringkoeffizienten b von mindestens 2000 (W s^{1/2})/(m² K), insbesondere von mindestens 6000 (W s^{1/2})/(m² K), bevorzugt von mindestens 9000 (W s^{1/2})/(m² K) und/oder
- einen Ausdehnungskoeffizienten bei 800°C von höchstens 12 x10⁻⁶ K⁻¹, insbesondere von höchstens 8x10⁻⁶ K⁻¹, bevorzugt von höchstens 6 x10⁻⁶ K⁻¹ aus.

Bevorzugt besteht der Wärmetauscher, insbesondere die Wärmespeichermasse oder der Wärmespeicherkörper zumindest zu einem Teil aus einerm keramischen Werkstoff, einem keramischen Verbundwerkstoff und/oder einem, eine Keramik umfassenden Materialgemisch, insbesondere besteht der Wärmetauscher im Wesentlichen aus diesem Material. In besonders bevorzugten Ausführungen weist der Wärmetauscher zumindest einen Anteil aus einer granularen Schüttung, insbesondere einer keramischen Schüttung auf. In anderen, vorteilhaften Ausführungen kann der Wärmetauscher aus polyedrischen Blöcken einer Wärmespeichermasse oder eines Wärmespeicherkörpers gefertigt oder aufgebaut sein oder diese zumindest umfassen. Bevorzugte Blöcke weisen dabei eine Kantenlänge von mindestens 5 cm, bevorzugt mindestens 10 cm, besonders bevorzugt mindestens 15 cm auf. Im Betrieb der Regeneratorkammern nimmt der Rohgasstrom über die Wärmetauscher Wärme auf und der gereinigte Gasstrom gibt Wärme an die Wärmetauscher ab, wobei in den Regeneratorkammern zumindest teilweise eine Oxidation der in dem Rohgasstrom enthaltenen Schadstoffe und in dem Brennraum der Brennkammer eine weitere Oxidation der in dem erwärmten, teilweise gereinigten Rohgasstrom enthaltenen Schadstoffe erfolgt.

Über das Spülsystem wird beim Umschalten der Zuführung des Rohgasstromes, wenn der Abgasventilator in Strömungsrichtung vor der Anlage steht, Spülgas aus einer der Regeneratorkammern derjenigen Regeneratorkammer über den Brennraum zugeführt, welcher vorher Rohgas aus der Zuführleitung zugeführt wurde, wobei der Spülgasstrom vor der Anlage in der Zuführleitung dem Rohgas beigemischt wird, und das Rohgas in eine erste der vorgesehenen Regeneratorkammern geleitet wird, um das Rohgas zu erwärmen, und anschließend das gereinigte Gas einer zweiten Regeneratorkammer zugeführt wird, um diese für eine nachfolgende Reinigung vorzuwärmen.

Wenn ein Abgasventilator in Strömungsrichtung hinter der Anlage steht, wird aus dem gereinigten Gasstrom nach dem Ventilator ein Spülgasstrom entnommen und derjenigen Regeneratorkammer zugeführt, welcher vorher Rohgas aus der Zuführleitung zugeführt wurde, wobei das nach dem Umschalten verbliebene Rohgas in die Brennkammer verdrängt wird, um nach der Vermischung mit dem Abgas und der Verbrennung der Schadstoffe als gereinigtes Abgas über einer zweiten Kammer zugeführt zu werden, um diese vorzuwärmen. Das gereinigte Gas wird nach dem Austritt aus der zweiten Regeneratorkammer über die Abführleitung aus der Anlage herausgeführt. Eine vierte Regeneratorkammer befindet sich während dieser normalen Betriebsart dann in einem Wartemodus.

Eine Idee der Erfindung ist es, eine Anlage zur regenerativen thermischen Oxidation nicht nur in einer Betriebsart für den Normalbetreib mit einem entsprechenden Volumenstrom zu betreiben, sondern auch in einer davon verschiedenen weiteren Betriebsart insbesondere für einen Boost-, Not- oder Überlastbetrieb, in der ein in Bezug auf die Betriebsart für den Normalbetrieb erheblich erhöhter Volumenstrom, z.B. ein doppelt so großer Volumenstrom gereinigt wird.

Für eine Überlast und/oder für einen Notbetrieb und/oder einen Boostbetrieb mit angehobener Durchsatzleistung wird der Rohgasstrom erfindungsgemäß aus der Zuführleitung abwechselnd zunächst wenigstens mehreren ersten Regeneratorkammern, vorzugsweise zwei ersten Regeneratorkammern aus der Gruppe von Regeneratorkammern gleichzeitig und der in diesen Regeneratorkammern gereinigte Gasstrom darauf einer zweiten anderen Regeneratorkammer oder mehreren zweiten anderen Regeneratorkammern, vorzugsweise zwei anderen Regeneratorkammern aus der Gruppe der Regeneratorkammern zugeführt. Dann wird der Rohgasstrom zunächst der zweiten anderen Regeneratorkammer oder gleichzeitig den mehreren zweiten anderen Regeneratorkammern, vorzugsweise den zwei anderen Regeneratorkammern aus der Gruppe der Regeneratorkammern und darauf den mehreren ersten Regeneratorkammern, vorzugsweise den zwei ersten Regeneratorkammern aus der Gruppe der Regeneratorkammern zugeführt.

Die Regeneratorkammern weisen bevorzugt einen keramischen Wärmetauscher auf. Diese keramischen Wärmetauscher haben günstiger Weise eine wabenförmige Struktur und/oder eine Vielzahl von sich durch den Wärmetauscher erstreckende Öffnungen. In einer erfindungsgemäßen Anlage wird ein Wärmetauscher abwechselnd von dem Rohgasstrom und dem gereinigten Gasstrom durchströmt, wobei der Rohgasstrom über die Wärmetauscher Wärme aufnimmt und der gereinigte Gasstrom Wärme an die Wärmetauscher abgibt. Der gereinigte Gasstrom wird dadurch auch abkühlt. In den Regeneratorkammern erfolgt dabei zumindest teilweise eine Oxidation der in dem Rohgasstrom enthaltenen Schadstoffe.

In dem Brennraum der Brennkammer in einer erfindungsgemäßen Anlage erfolgt eine weitere Oxidation der in dem erwärmten, teilweise gereinigten Rohgasstrom enthaltenen Schadstoffe. Über das Spülsystem wird beim Umschalten der Zuführung des Rohgasstromes, wenn der Abgasventilator in Strömungsrichtung vor der Anlage steht, Spülgas aus einer der Regeneratorkammern derjenigen Regeneratorkammer über den Brennraum der Brennkammer zugeführt, welcher vorher Rohgas aus der Zuführleitung zugeführt wurde.

Der Spülgasstrom wird vor der Anlage in der Zuführleitung dem Rohgas beigemischt. Das Rohgas wird dann in eine erste der vorgesehenen Regeneratorkammern geleitet, um das Rohgas zu erwärmen. Anschließend wird das gereinigte Gas einer zweiten Regeneratorkammer zugeführt, um diese für eine nachfolgende Reinigung vorzuwärmen. Wenn der Abgasventilator in Strömungsrichtung hinter der Anlage steht, wird aus dem gereinigten Gasstrom nach dem Ventilator ein Spülgasstrom entnommen und derjenigen Regeneratorkammer zugeführt, welcher vorher Rohgas aus der Zuführleitung zugeführt wurde, wobei das nach dem Umschalten verbliebene Rohgas in die Brennkammer verdrängt wird, um nach der Vermischung mit dem Abgas und der Verbrennung der Schadstoffe als gereinigtes Abgas über einer zweiten Kammer zugeführt zu werden, damit diese vorgewärmt wird. Das gereinigte Gas wird nach dem Austritt aus der zweiten Regeneratorkammer über die Abführleitung aus der Anlage herausgeführt.

Eine vierte Regeneratorkammer befindet sich während dieser normalen Betriebsart bevorzugt in einem Wartemodus. Ein derartiger Wartemodus wird auch als Standby-Betrieb bezeichnet, wobei dieser Regeneratorkammer aktiv keine Abluft bzw. kein Rohgasstrom zugeführt wird. Dazu sind die Ventile zu dieser vierten Regeneratorkammer geschlossen.

Erfindungsgemäß kann die Anlage in einer Anlagen-Betriebsart betrieben werden, in welcher der Rohgasstrom aus der Zuführleitung zwei Regeneratorkammern und der in diesen zwei Regeneratorkammern und in der Brennkammer gereinigte Gasstrom den zwei anderen Regeneratorkammern zugeführt wird, wobei die Zuführung des Rohgasstromes abwechselnd zu den jeweils zwei Regeneratorkammern erfolgt.

In dieser Anlagen-Betriebsart kann daher die Anlage mit einem Rohgasvolumenstrom betrieben werden bzw. einen Rohgasvolumenstrom reinigen, der größer ist als derjenige, der im Nenn- bzw. Maximallastfall von der Anlage gereinigt werden kann. Dabei kann der Rohgasvolumenstrom maximal doppelt so groß sein als derjenige im Nenn- bzw. Maximallastfall.

In der vorgenannten Anlagen-Betriebsart wird der Rohgasstrom gleichzeitig durch zwei Regeneratorkammern geleitet und vorgewärmt. Nach der Oxidation in der Brennkammer wird das gereinigte Gas wiederum gleichzeitig durch zwei Regeneratorkammern abgeführt und das gereinigte Gas gibt Wärme an die Wärmetauscher der Regeneratorkammern ab. Nach dem Umschalten wird das Rohgas durch die beiden im vorangegangenen Zyklus mit Reingas durchströmten Regeneratorkammern geführt und dabei vorgewärmt.

Da die vorstehend beschriebene erfindungsgemäße Anlagen-Betriebsart eine über den Nennlastfall hinausreichende Abluftreinigungskapazität zur Verfügung stellt, kann diese weitere Betriebsart auch als Überlast- oder Notbetrieb bezeichnet werden.

Bei einer Anwendung, in welcher der Abgasvolumenstrom prozessbedingt kurzfristig und nur für eine kurze Zeit ansteigt, kann durch das erfindungsgemäße Verfahren der Volumenstromanstieg des Abgasvolumenstroms einer vorgelagerten Emissionsquelle dennoch gereinigt werden, ohne dass Abgas in die Atmosphäre gelangt oder dass eine weitere Anlage für die renenerative thermische Oxidation (RTO) von Rohgas erforderlich ist. Der Anlage kann damit im Normalbetrieb (Teillastbetrieb) ein Rohgasvolumen zugeführt werden, welches deutlich unter dem Rohgasvolumen liegt, das der Anlage bei einer Nenn- bzw. Maximalbelastung zugeführt werden kann.

Beispielsweise kann bei einem System mit zwei Anlagen auch jede der beiden Anlagen, die als Vier-Kammer-RTO-Anlagen ausgebildet sind, dazu eingesetzt werden, um bei einem Ausfall oder einer Wartung der anderen der beiden Anlagen den gesamten Rohgas-/Abluftvolumenstrom zu reinigen. Diese RTO-Anlagen, welche als Vier-Kammer-RTO-Anlagen ausgeführt sind, werden in einem Normalbetrieb jeweils als Drei-Kammer-RTO-Anlagen betrieben, wobei eine der Regeneratorkammern sich periodisch im Standby-Modus befindet. Die einzige Beschränkung, die sich in der weiteren Betriebsart/dem weiteren Betrieb dabei einstellt, ist, dass kein Spülen mehr für die Dauer der weiteren Betriebsart beziehungsweise für die Dauer des weiteren Betriebs in der Anlage durchgeführt werden kann, solange der weitere Betrieb gefahren wird. Jedoch ist dies vor allem dann zu vernachlässigen, wenn die Anlage nur dann in dem weiteren Betrieb betrieben wird, wenn es sich um einen so genannten Notbetrieb bei einem Ausfall einer anderen RTO-Anlage handelt. Ein weiterer Vorteil ist auch darin zu sehen, dass die Zeitspanne zum Anfahren einer möglichen dritten RTO-Anlage, wie beim Stand der Technik erforderlich, entfällt. Dieser Vorteil besteht auch gegenüber einem Anlagenverbund mit drei RTO-Anlagen, die in einem Teillastbetrieb arbeiten müssen, was geringe Wirkungsgrade zur Folge hätte. Bei einem Teillastbetrieb werden die Wärmetauscher nicht so stark erwärmt, so dass mitunter keine autotherme Oxidation durchgeführt werden kann. Deshalb muss zusätzlich Energie zur Erwärmung des Rohgases eingebracht werden. Außerdem wäre ein derartiger Anlagenverbund überdimensioniert, da in der Regel kein Ausfall einer der drei RTO-Anlagen auftritt. Würde einer der drei RTO-Anlagen kein Rohgas in einem normalen Betrieb zugeführt werden, müssten die Regeneratorkammern bzw. die Wärmetauscher und der Brennraum einer Standby-Anlage in einem Notbetrieb erst auf eine bestimmte Temperatur gebracht werden. Dies kann je nach Größe der RTO-Anlage lange dauern. In einem Notbetrieb ist es aber zwingend erforderlich, dass sofort nach Ausfall einer RTO-Anlage das Rohgas gereinigt werden kann und keine Schadstoffe in die Umgebung/Atmosphäre gelangen. Da die Rohgasausgabe der Emissionsquelle des Rohgasstromes in der Regel bei einem Ausfall einer RTO-Anlage nicht kurzfristig reduziert werden kann und das Rohgas aber auf keinen Fall ungereinigt in die Atmosphäre gelangen darf, werden im Stand der Technik bisher oftmals Lösungen verwendet, welche die oben genannten Nachteile aufweisen.

Die vorstehend beschriebenen Vorteile des erfindungsgemäßen Verfahrens sind dabei nicht auf einen Anlagenverbund mit mindestens zwei Anlagen beschränkt, sondern ergeben sich auch bei einer einzelnen Anlage, welcher beispielsweise ein doppelter Abgasvolumenstrom zugeführt wird, welcher aufgrund der Verarbeitung in einer der Anlage vorgelagerten Emissionsquelle nur kurzzeitig auftritt. Da der erhöhte bzw. doppelte Abgasvolumenstrom nur für eine kurze Zeit der Anlage zugeführt wird, wäre ein Anlagenverbund mit mehreren Anlagen oder eine größere Anlage nicht wirtschaftlich.

Bei dem erfindungsgemäßen Verfahren ist jedoch möglich, kurzfristig den maximal zu reinigenden Volumenstrom einer RTO-Anlage zu verdoppeln, ohne dass die Anlage in dem normalen Betrieb oder in dem weiteren Betrieb in einem für die Reinigung schlechten Betriebszustand aufgrund des Wirkungsgrades und des Lastfalls betrieben werden muss.

Weiter kann in einer vierten Regeneratorkammer der Anlage eine Reinigung der Regeneratorkammern durch Verdampfen/Verbrennen von festen und flüssigen Bestandteilen der Schadstoffe, die sich an den Wärmetauschern und/oder an Komponenten der Anlage (z. B. in den Regeneratorkammern) ablagern, in der normalen Betriebsart erfolgen. Das Verdampfen/Verbrennen von festen und flüssigen Bestandteilen der Schadstoffe verlängert die Einsatzzeiten der Wärmetauscher und verlängert den Zeitraum zwischen zwei Wartungen. Bevorzugt kann die Reinigung der wenigstens einen Regeneratorkammer in regelmäßigen Zeitabständen und/oder in Abhängigkeit einer Zustandsgröße der Regeneratorkammer), insbesondere einer Druckdifferenz und/oder Temperaturdifferenz und/oder Volumenstromdifferenz und/oder Schadstoffbeladung zwischen der Zuführungsleitung und dem Eingang in den Brennraum durchgeführt werden.

Die Anlage kann weiter eine fünfte Regeneratorkammer aufweisen, die über Ventile mit der Abführ- und der Zuführleitung sowie dem Spülsystem verbunden ist und über die Brennkammer mit den anderen Regeneratorkammern verbunden ist, wobei mittels der fünften Regeneratorkammer auch eine Reinigung der Regeneratorkammern in der weiteren Betriebsart erfolgen kann. Dadurch ist es möglich, auch in der weiteren Betriebsart das Verdampfen/Verbrennen von festen und flüssigen Bestandteilen der Schadstoffe durchzuführen. Dies ist beispielsweise dann vorteilhaft, wenn ein Notbetrieb längere Zeit andauert, wenn die Wartung einer anderen Anlage in einem Systemverbund längere Zeit in Anspruch nimmt oder wenn einer einzelnen Anlage für eine längere Zeit ein größerer Abgasvolumenstrom zugeführt wird als im Normalbetrieb.

Die fünfte Regeneratorkammer kann bei dem Verfahren zudem ebenso in das alternierende Umschalten eingebunden sein, wobei die fünfte Regeneratorkammer auch einen Wärmetauscher aufweist.

Die Zuführ- und die Abführleitung sowie die Leitungen des Spülsystems können derart ausgebildet sein, dass den Regeneratorkammern in der weiteren Betriebsart ein Rohgasvolumenstrom zugeführt werden kann, der doppelt so groß ist wie der Rohgasvolumenstrom, der in einer normalen Betriebsart maximal den Regeneratorkammern zugeführt werden kann. Dabei können diese Leitungen auch zweifach vorgesehen sein, so dass in einer normalen Betriebsart ein Rohgasstrom durch eine erste Leitung in der Zuführleitung strömt und in dem weiteren Betrieb der Rohgasstrom durch die erste und durch eine zweite Leitung strömt. Durch die Verwendung von zwei Leitungen können die Zustände des Rohgasstromes auch in der weiteren Betriebsart aufrecht erhalten werden. Es kann sich aber auch als vorteilhaft erweisen, Leitungen zu verwenden, welche einen doppelt so großen Volumenstrom führen können, wie er in einem Normalbetrieb durch die Leitungen geführt wird.

Die Wärmespeicher können als keramische Wärmetauscher ausgebildet sein, welche eine wabenförmige Struktur und/oder eine Vielzahl von sich durch den Wärmetauscher erstreckende Öffnungen aufweisen. Dadurch wird eine große Oberfläche für den Wärmeübergang von und zu den Wärmetauschern und dem Gasstrom bereitgestellt. Es können für die Wärmetauscher aber auch andere Materialien und Strukturen verwendet werden.

Die Anlage wird nur dann in der weiteren Betriebsart betrieben werden, wenn bestimmte Kriterien erfüllt sind, wobei die Anlage in der weiteren Betriebsart so lange betrieben wird, wie diese bestimmten Kriterien erfüllt sind. Diese Kriterien können dabei u.a. ein (Rohgas-/gereinigten Gas-)Volumenstrom, ein Volumenstromverhältnis, ein Differenzdruck über die Anlage oder Teile davon, eine Konzentration von Schadstoffen in dem Rohgas und/oder dem gereinigten Abgas, eine Kenngröße des Rohgasstromes von einer Einrichtung, von welcher der Rohgasstrom der Anlage zugeführt wird, und/oder eine Temperatur in Bereichen der Anlage sein und/oder weitere dem Fachmann bekannte Zustandsgrößen von Anlagen zur thermisch regenerativen Oxidation sein sowie aus diesen abgeleitete Größen sein. So können beispielsweise auch Temperaturen in den einzelnen Regeneratorkammern oder in der Brennkammer als bestimmtes Kriterium herangezogen werden.

Die bestimmten Kriterien können darüber hinaus ein Betriebszustand weiterer Anlagen zur regenerativen thermischen Oxidation an dem Anlagenverbund, ein (Rohgas-/gereinigten Gas-)Volumenstrom, ein Volumenstromverhältnis, ein Differenzdruck über die Anlage oder Teile davon, eine Konzentration von Schadstoffen in dem Rohgas und/oder dem gereinigten Abgas, eine Kenngröße des Rohgasstromes von einer Einrichtung, von welcher der Rohgasstrom der Anlage zugeführt wird, und/oder eine Temperatur in Bereichen der Anlage sein. So können beispielsweise auch Temperaturen in den einzelnen Regeneratorkammern oder in der Brennkammer als bestimmtes Kriterium herangezogen werden. Auch ist es darüber hinaus möglich, die Konzentration von Schadstoffen in dem gereinigten Gasstrom als bestimmtes Kriterium zu verwenden. Überschreiten diese bestimmten Kriterien einen bestimmten Grenzwert, so muss aus einem normalen Betrieb in den weiteren Betrieb, insbesondere die erste Anlagen-Betriebsart umgeschaltet werden.

In einem Anlagenverbund oder System aus erfindungsgemäßen Anlagen ist es vorteilhaft, wenn eine der Anlagen als Masteranlage betrieben wird. Unter einer Masteranlage wird in diesem Zusammenhang insbesondere eine Anlage der vorgenannten, erfindungsgemäßen Art verstanden, welche den Betriebszustand zumindest einer weiteren im Anlagenverbund oder System betriebenen Anlage der erfindungsgemäßen Art, einer sogenannten Slaveanlage, überwacht und auch deren Betriebsart steuernd beeinflusst. Vorzugsweise ist die Steuereinheit der Masteranlage dabei mit den Mitteln zur Überwachung des Betriebszustands der Slaveanlage verbunden. Es kann dabei auch vorgesehen sein, dass die Steuereinheit der Masteranlage mit den Ventilen der Slaveanlage derart verbunden ist, dass die Ventile der Slaveanlage direkt von der Steuereinheit der Masteranlage eingestellt werden können.

In einem Anlagenverbund oder System aus erfindungsgemäßen Anlagen kann alternativ oder ergänzend auch ein "Twin-Mode" vorgesehen sein. Unter einem "Twin-Mode" wird dabei insbesondere der gleichrangige Betrieb der erfindungsgemäßen Anlagen im Anlagenverbund oder System verstanden. Dazu ist es zweckmäßig, wenn die Steuereinheiten jeder der erfindungsgemäßen Anlagen zumindest auch mit einem, vorzugsweise mehreren, idealerweise allen Mitteln zur Überwachung des Betriebszustandes der jeweils anderen Anlage im Anlagenverbund oder System verbunden ist, insbesondere wenn die von diesen Mitteln erfassten Daten zum Betriebszustand der jeweils anderen Anlage zur Steuerung und/oder Regelung der jeweils der Steuereinheit zugeordneten Anlage im Anlagenverbund oder System herangezogen werden.

Alternativ oder ergänzend können Mittel zur Kommunikation zwischen den Steuerungen der Anlagen im System, zum Beispiel ein gemeinsamer Datenbus, ein Datennetzwerk o.ä. vorgesehen sein. Vorzugweise kann weiters eine Abgleicheinheit mit den Steuerungen verbunden oder in wenigstens einer der Steuerungen vorgesehen sein, welche einen dem System zugeführten Rohgasstrom abhängig vom Betriebszustand der Anlagen im System auf die jeweiligen Anlagen aufteilt und/oder die Umschaltung zwischen der ersten, zweiten oder weiteren Anlagen-Betriebsart sowie dem Modulationsbetrieb der Anlagen im System steuert und/oder den Reinigungsbetrieb in mindestens einer Anlage des Systems auslöst. Diese Maßnahmen erlauben eine vorteilhafte Optimierung der Prozessabläufe im Anlagenverbund oder dem System, so dass das System bei sich ändernden Lastzuständen- und/oder in Ausnahmezuständen an Toleranz und Robustheit gewinnt.

Die Steuerung kann mit Mitteln zum Erfassen dieser bestimmten Kriterien verbunden sein, welche in der Zuführ-, Abführleitung und/oder anderen Komponenten der Anlage angeordnet sind, wobei die Steuerung die Ventile der Regeneratorkammern in Abhängigkeit der bestimmten Kriterien derart steuert, dass die Anlage in einer normalen Betriebsart oder in der weiteren Betriebsart betrieben wird. Geeignete Mittel können dabei Drucksensoren, Temperaturfühler, Schadstoffsensoren oder -detektoren, Luftmassenmesser und/oder optische Überwachungseinreichtungen sowie kombinierte Messsysteme sein, welche mindestens zwei Zustandsgrößen im Wesentlichen gleichzeitig erfassen und für eine Kriterienbildung zur Verfügung stellen können.

Weiterhin können die mindestens vier Regeneratorkammern in Reihe angeordnet sein, wobei der Rohgasstrom in dem weiteren Betrieb abwechselnd den beiden äußeren Regeneratorkammern und den beiden inneren Regeneratorkammern zugeführt wird und das gereinigte Gas die beiden inneren Regeneratorkammern und die beiden äußeren Regeneratorkammern durchströmt und von dort zu der Abführleitung gelangt. Auch ist eine Durchströmung der Regeneratorkammern in der Weise möglich, dass von der ersten in die zweite der Gasstrom geleitet wird und von der dritten in die vierte bzw. jeweils umgekehrt, von der zweiten in die erste und von der vierten in die dritte. Eine Durchströmung von einer ersten zu einer dritten Regeneratorkammer, einer zweiten zu einer vierten Regeneratorkammer, bzw. umgekehrt, hat sich als strömungsmechanisch ungünstiger erwiesen. Je nach Anordnung der Regeneratorkammern ergeben sich auch bei Anlagen mit mehr als vier Regeneratorkammern vorteilhafte Strömungsrichtungen in dem weiteren Betrieb. Zum Beispiel von "innen" nach "außen" bei einer Anlage mit mindestens einer Regeneratorkammer, die ringförmig von weiteren Regeneratorkammern umgeben ist.

Darüber hinaus kann das Umschalten in der normalen Betriebsart und in der weiteren Betriebsart und/oder das Reinigen einer vierten Regeneratorkammer in regelmäßigen Abständen durchgeführt werden. Eine Umschaltung in im Wesentlichen regelmäßigen zeitlichen Abständen kann dabei als Modulationsbetriebsart der erfindungsgemäßen Anlage zur Anwendung kommen. In diesem Modulationsbetrieb vermag die Anlage vorteilhafterweise einen, zum Beispiel über ein Tastverhältnis der Umschaltung einstellbaren Rohgasvolumenstrom zu reinigen, dessen Volumenstrom zwischen dem Nennvolumenstrom und dem Doppelten des Nennvolumenstroms der Anlage liegt.

Die Bezeichnung erste, zweite, dritte und vierte Regeneratorkammer ist nicht einschränkend zu verstehen, wobei sich während des Umschaltens und in den einzelnen Betriebszuständen in dem normalen Betrieb und in dem weiteren Betrieb die Betriebszustände in den einzelnen Regeneratorkammern ändern.

Darüber hinaus ist mit einer fünften Regeneratorkammer auch ein Spülen der mit einem Rohgasstrom durchströmten Regeneratorkammer bei der periodischen Umschaltung der Strömungsrichtung möglich, so dass hierbei kein so genannter "Umschaltpeak" mehr auftritt. Das oben beschriebene Verfahren ist darüber hinaus für alle Mehrkammer-RTO-Anlagen geeignet, welche mindestens vier Kammern aufweisen.

Weitere Ziele, Merkmale, Vorteile und Anwendungsmöglichkeiten ergeben sich aus der nachfolgenden Beschreibung von nicht einschränkend zu verstehenden Ausführungsbeispielen mit Bezug auf die zugehörigen Zeichnungen. Dabei bilden alle beschriebenen und/oder bildlich dargestellten Merkmale für sich oder in beliebiger Kombination den hier offenbarten Gegenstand, auch unabhängig von ihrer Gruppierung in den Ansprüchen oder deren Rückbeziehungen. Die Abmessungen und Proportionen der in den Figuren dargestellten Komponenten sind hierbei nicht unbedingt maßstäblich; sie können bei zu implementierenden Ausführungsformen vom Veranschaulichten abweichen.

In den Zeichnungen zeigen:
- Fig. 1a bis d: eine schematische Darstellung einer RTO-Anlage in einer normalen Betriebsart mit verschiedenen Durchströmungen;
- Fig. 2: eine schematische Darstellung einer RTO-Anlage in einer weiteren Betriebsart;
- Fig. 3: eine schematische Darstellung einer RTO-Anlage in einer weiteren Betriebsart nach einem Umschalten;
- Fig. 4: ein System zur Abluft- oder Abgasreinigung mit zwei gekoppelten Anlagen zur regenerativen thermischen Oxidation; und
- Fig. 5: ein weiteres System zur Abluft- oder Abgasreinigung mit zwei gekoppelten Anlagen zur regenerativen thermischen Oxidation.

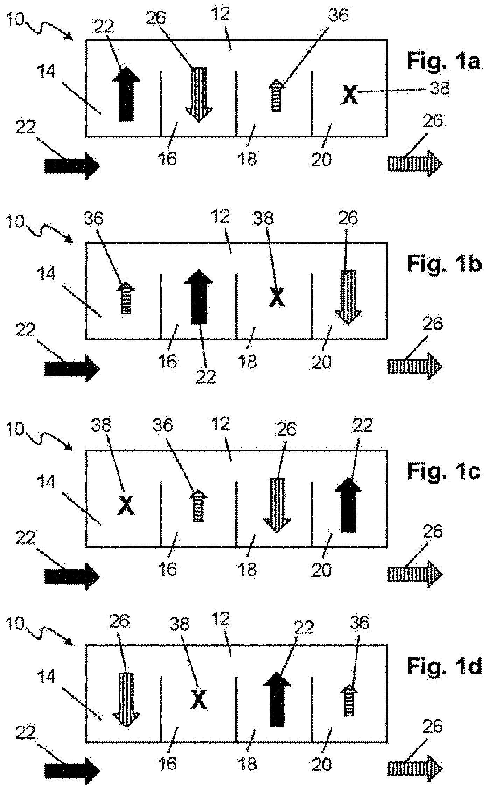

In den Fig. 1a bis d ist schematisch eine Anlage 10 zur regenerativen thermischen Oxidation mit verschiedenen Durchströmungen der Regeneratorkammern 14, 16, 18 und 20 dargestellt. Diese Anlage 10 weist eine erste Regeneratorkammer 14, eine zweite Regeneratorkammer 16, eine dritte Regeneratorkammer 18 und eine vierte Regeneratorkammer 20 auf, die über eine Brennkammer 12 miteinander in Verbindung stehen. Die Regeneratorkammern 14, 16, 18 und 20 sind über Ventile (in den Figuren nicht dargestellt) mit einer Zuführleitung zum Zuführen eines Rohgasstromes und einer Abführleitung zum Abführen eines gereinigten Gasstromes verbunden (in den Figuren nicht dargestellt). Die in den Fig. 1 bis 3 gezeigte Anlage 10 entspricht im Wesentlichen einer aus dem Stand der Technik bekannten RTO-Anlage und ist darüber hinaus über Ventile mit einem Spülsystem verbunden, welches dazu dient, beim Umschalten der Zuführung des Rohgasstromes sich noch in einer der vier Regeneratorkammern 14, 16, 18 und 20 befindliches Rohgases zu "Lüften", so dass kein Rohgas in die Abführleitung und in die Atmosphäre gelangt.

Die Anlage 10 weist darüber hinaus noch eine Vielzahl von weiteren Bestandteilen auf, welche aus Gründen der Übersichtlichkeit nicht dargestellt sind. Die in den Figuren dargestellten Anlagen 10 dienen lediglich zur Erläuterung des Prinzips des weiteren Betriebs bzw. der weiteren Betriebsart.

In der ersten Regeneratorkammer 14, der zweiten Regeneratorkammer 16, der dritten Regeneratorkammer 18 und der vierten Regeneratorkammer 20 sind keramische Wärmetauscher angeordnet, welche eine wabenförmige Struktur und/oder eine Vielzahl von sich durch den keramischen Wärmetauscher erstreckende Öffnungen aufweisen, so dass beim Durchströmen des Rohgasstromes 22 die Wärmetauscher Wärme an den Rohgasstrom 22 abgeben, um den Rohgasstrom 22 aufzuheizen, und beim Durchströmen eines gereinigten Gasstromes 26 der gereinigte Gasstrom 26 Wärme an die keramischen Wärmetauscher abgibt. Dabei wird der gereinigte Gasstrom 26 auch gekühlt, so dass keine heißen Gase an die Umgebung abgegeben werden.

Bei der in Fig. 1a in einer normalen Betriebsart befindlichen Anlage 10 strömt ein Rohgasstrom 22 über geöffnete Ventile in die erste Regeneratorkammer 14 und durchströmt dabei den darin befindlichen keramischen Wärmetauscher, der vorher im Betrieb durch einen gereinigten Gasstrom 26 oder eine Einrichtung (in den Figuren nicht dargestellt) aufgeheizt worden ist. Durch das Erhitzen des Rohgasstromes 22 in der ersten Regeneratorkammer 14 beginnt der Rohgasstrom 22 mit dem in der Regeneratorkammer 14 und im Brennraum 12 befindlichen Sauerstoff zu reagieren, so dass eine Oxidation der sich in dem Abgasstrom enthaltenen Schadstoffe erfolgt. Dabei erfolgt die Durchströmung der Anlage 10 mit einem Rohgasstrom 22, welcher teilweise in der ersten Regeneratorkammer 14 oxidiert und wobei ein teilweise gereinigter Gasstrom in der Brennkammer 12 weiter oxidiert und anschließend als gereinigter Gasstrom 26 die zweite Regeneratorkammer 16 und den darin befindlichen keramischen Wärmetauscher durchströmt. Anschließend wird der gereinigte Gasstrom 26 über Ventile aus der zweiten Regeneratorkammer 16 herausgeführt und über eine Abführleitung abtransportiert. Der gereinigte Gasstrom 26 kann dann in die Atmosphäre herausgeführt werden.

Die außerhalb der Regeneratorkammern gezeigten Pfeile 22, 26 deuten die Zuführung des Rohgasstromes 22 über die Zuführleitung und die Abführung des gereinigten Gasstromes 26 über die Abführleitung an.

Bei dem in Fig. 1a dargestellten Beispiel dient die dritte Regeneratorkammer 18 beim Umschalten der Zuführung des Rohgasstromes 22 dazu, das sich in der ersten Regeneratorkammer 14 befindliche Rohgas daran zu hindern, in die Abführleitung zu gelangen. Das wird durch ein entsprechendes Öffnen der Ventile des Spülsystems erreicht. Ein Spülstrom 36 durchströmt dazu die Regeneratorkammer 18. Die vierte Regeneratorkammer 20 befindet sich bei Fig. 1a in einem Standby-Betrieb 38. Bei dem Standby-Betrieb 38 wird die vierte Regeneratorkammer 20 nicht aktiv zur regenerativen thermischen Oxidation verwendet, indem die Ventile der vierten Regeneratorkammer 20 geschlossen bleiben.

Nach dem Umschalten (Fig. 1b) wird der Rohgasstrom 22 der zweiten Regeneratorkammer 16 zugeführt, dessen keramischer Wärmetauscher durch die Durchströmung mit dem gereinigten Gasstrom 26 in einem vorangegangenen Zyklus (Fig. 1a) erwärmt worden ist. Von der zweiten Regeneratorkammer 16 strömt dann der teilweise gereinigte Gasstrom in die Brennkammer 12 und oxidiert darin vollständig, so dass anschließend der gereinigte Gasstrom 26 in die vierte Regeneratorkammer 20 strömt und den darin befindlichen keramischen Wärmetauscher durchströmt. Dadurch wird der keramische Wärmetauscher der vierten Regeneratorkammer 20 erwärmt. Anschließend wird der gereinigte Gasstrom 26 aus der vierten Regeneratorkammer 20 herausgeführt und über die Abführleitung aus der Anlage 10 heraustransportiert. Die erste Regeneratorkammer 14 wird vom Spülstrom 16 durchströmt und die dritte Regeneratorkammer 18 befindet sich im Standby-Betrieb 38.

Die Fig. 1c und 1d zeigen weitere Zustände in der Anlage 10 nach einem Umschalten. Die gezeigten Zustände können aber auch variieren, wobei die Anlage 10 in einem alternierenden Betrieb betrieben wird, d. h. dass sich bei allen Regeneratorkammern die Rohgas-, Reingas-, Spül- und Stand-by Phase abwechseln. Dadurch wird auch die Regeneratorkammer immer "auf Temperatur" gehalten, welche sich in dem Standby-Betrieb 38 befindet, wodurch ein unmittelbares Umschalten von der normalen auf die weitere Betriebsart ermöglicht wird.

Die Steuerung der Zu- und Abfuhr des Rohgasstromes 22 und des gereinigten Gasstromes 26 erfolgt jeweils über Öffnen und Schließen der entsprechenden Ventile der ersten Regeneratorkammer 14, der zweiten Regeneratorkammer 16, der dritten Regeneratorkammer 18 und der vierten Regeneratorkammer 20.

Die Anlage 10 wird dabei mit einem Rohgasstrom 22 durchströmt, welcher im Wesentlichen der maximalen Gasstrommenge entspricht, die durch die Anlage 10 gereinigt werden kann. Eine entsprechend hohe Auslastung bzw. Durchströmung der Anlage 10 ist deshalb erforderlich, weil bei geringeren Volumenströmen die keramischen Wärmetauscher nicht ausreichend Wärme an den Rohgasstrom 22 abgeben können. Dadurch würde nur eine geringe Oxidation der Schadstoffe im Rohgasstrom 22 erfolgen, so dass wesentlich mehr oder überhaupt Energie für die Erwärmung der Brennkammer 12 auf die notwendige Temperatur zugeführt werden muss, um das in der Brennkammer 12 befindliche Rohgas vollständig oxidieren zu lassen. Je höher die Erwärmung des Rohgasstromes 22 durch den keramischen Wärmetauscher in den Regeneratorkammern 14, 16, 18 und 20 ist, desto geringer ist die für eine zusätzliche Erwärmung des Rohgases in der Brennkammer 12 benötigte Energie. Bei einem entsprechenden Volumenstrom und bei entsprechenden Konzentrationen mit Schadstoffen in dem Rohgasstrom kann sogar ein autothermer Betrieb der Anlage 10 erreicht werden, so dass keine zusätzliche Energie in die Anlage 10 bzw. in die Brennkammer 12 eingebracht werden muss, um eine vollständige Oxidation der in dem Rohgas enthaltenen Schadstoffe bereitzustellen.

Solche Anlagen 10 zur regenerativen thermischen Oxidation werden daher möglichst mit einer hohen Auslastung betrieben, um einerseits einen möglichst autothermen Betrieb bereitzustellen und um andererseits den Wirkungsgrad der Reinigung möglichst hoch zu halten.

Die vierte Regeneratorkammer 20 bei Fig. 1a kann darüber hinaus dazu verwendet werden, um feste und flüssige Bestandteile der Schadstoffe, welche sich in den Regeneratorkammern 14, 16, 18 und 20 ablagern, zu entfernen. Dazu wird auf der Rohgaseintrittsseite der vierten Regeneratorkammer 20 Abgas aus der Brennkammer abgesaugt, so dass die Temperatur in der Regeneratorkammer 20 auf 300 bis 500 °C ansteigt und die organischen Ablagerungen verdampfen/abbrennen. Dieser Abgasstrom wird dann in die Brennkammer geführt, wo die organischen Bestandteile im Abgasstrom verbrannt werden. Je nach Zustand oder Phase und Durchströmung können aber auch die zweite, die dritte und die vierte Regeneratorkammer 16, 18 und 20 dazu verwendet werden, um die jeweilige Regeneratorkammer freizubrennen ("Online-Burnout").

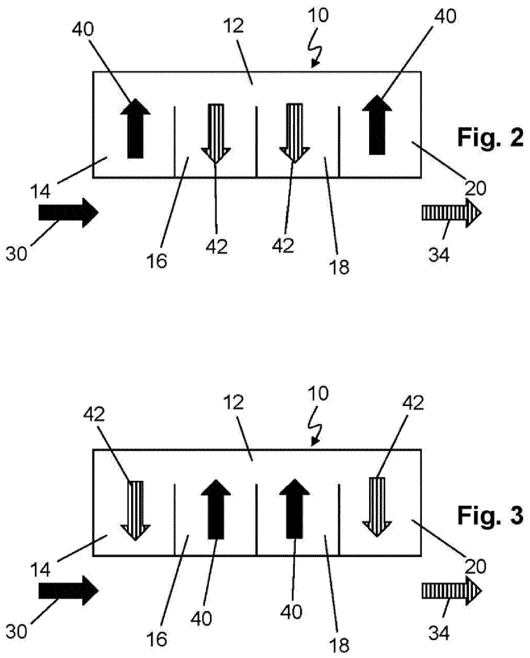

In Fig. 2 ist beispielhaft für eine Strömungsführung eine schematische Darstellung einer RTO-Anlage in einer weiteren Betriebsart dargestellt, wobei ein Rohgasstrom 30 sowohl der ersten Regeneratorkammer 14 als auch der vierten Regeneratorkammer 20 zugeführt wird. Ein Rohgasteilstrom 40 durchströmt die erste Regeneratorkammer 14 und ein Rohgasteilstrom 40 durchströmt die vierte Regeneratorkammer 20. Dabei wird der Rohgasstrom 30 in die Rohgasteilströme 40 aufgeteilt.

Dadurch kann der Volumenstrom von Rohgas, der maximal durch die Anlage 10 gereinigt werden kann, verdoppelt werden. Der Rohgasstrom 30 bzw. die Rohgasteilströme 40 durchströmen dabei die keramischen Wärmetauscher der ersten Regeneratorkammer 14 und der vierten Regeneratorkammer 20 und teilweise gereinigte Gasströme strömen dann in die Brennkammer 12, in welcher eine vollständige Oxidation der organischen Schadstoffe in den Gasströmen erfolgt. Anschließend werden die gereinigten Gasteilströme 42 über die zweite Regeneratorkammer 16 und die dritte Regeneratorkammer 18 aus der Anlage 10 über eine Abführleitung herausgeführt, wobei die gereinigten Gasteilströme 42 die keramischen Wärmetauscher der zweiten Regeneratorkammer 16 und der dritten Regeneratorkammer 18 durchströmen, um diese für ein Durchströmen eines Rohgases 30 bzw. Rohgasteilströme 40 in einem weiteren Zyklus nach einem Umschalten aufzuheizen.

Bei der in der Fig. 2 gezeigten Darstellung soll nur der Betrieb der Anlage 10 verdeutlicht werden, wobei die Pfeile 30, 34 und 42 die Strömungsrichtung des Rohgases und des gereinigten Gases in einem Betriebszustand des vorliegenden Ausführungsbeispiesl angeben. Der gereinigte Gasstrom 34 setzt sich aus den gereinigten Gasteilströmen 42 zusammen, die die Wärmetauscher der zweiten und der dritten Regeneratorkammer 16, 18 durchströmen und anschließend in die Abführleitung strömen. Aus Gründen der Anschaulichkeit wurde in den Figuren darauf verzichtet, die Ventile und Zuführ- bzw. Abführleitungen und die Leitungen des Spülsystems darzustellen.

Bei dieser weiteren Betriebsart kann zwar kein Freibrennen von festen und flüssigen Bestandteilen der Schadstoffe, die sich in den Regeneratorkammern 14, 16, 18 und 20 abgelagert haben, stattfinden, wobei dies in der weiteren Betriebsart nicht erforderlich ist, da die weitere Betriebsart bzw. der weitere Betrieb zum Beispiel auch für einen Notbetrieb vorgesehen ist, in welchem ein Volumenstrom bzw. Rohgasstrom in der Anlage 10 gereinigt werden muss, der größer ist als der maximal von der Anlage 10 zu reinigende Abgasstrom 22. Dabei wird die weitere Betriebsart dann gewählt, wenn beispielsweise in einem Anlagenverbund mit zwei Anlagen 10, welchen beiden Rohgas zugeführt wird, eine der Anlagen 10 ausfällt oder gewartet wird. Die weitere Betriebsart wird auch dann gewählt, wenn beispielsweise prozesstechnisch eine kurzzeitige Erhöhung/Verdoppelung des Abluftvolumenstromes auftritt. Um zu verhindern, dass Rohgas direkt ohne Reinigung in die Atmosphäre gelangt, wird dann die weitere Betriebsart durch eine Steuerung der Anlage 10 bzw. des Anlagenverbundes aktiviert und die Ventile der ersten Regeneratorkammer 14, der zweiten Regeneratorkammer 16, der dritten Regeneratorkammer 18 und der vierten Regeneratorkammer 20 entsprechend geöffnet und geschlossen. Dadurch ergibt sich ein Durchströmen einer einzelnen Anlage 10 und die Reinigung eines Abgasstromes 30, der doppelt so groß ist wie die maximal mögliche Menge des zu reinigenden Abgases für die Anlage 10.

Weist die Anlage 10 noch eine fünfte Regeneratorkammer (in den Figuren nicht dargestellt) auf, so kann auch in der weiteren Betriebsart ein Spülen wie bei einer RTO-Anlage mit mindestens drei Regeneratorkammern erfolgen oder ein Freibrennen einer der Regeneratorkammern durchgeführt werden.

Fig. 3 zeigt die Anlage 10 in einer weiteren beispielhaften Betriebsart nach einem Umschalten, wobei die Rohgasteilströme 40 des Rohgasstromes 30 der zweiten Regeneratorkammer 16 und der dritten Regeneratorkammer 18 zugeführt werden und das gereinigte Gas die erste Regeneratorkammer 14 und die vierte Regeneratorkammer 20 durchströmt, um die darin befindlichen keramischen Wärmetauscher aufzuheizen. Die gereinigten Gasteilströme 42 strömen dann von der ersten Regeneratorkammer 14 und der vierten Regeneratorkammer 20 in die Abführleitung und der gereinigte Gasstrom 34 wird dann in die Atmosphäre abtransportiert.

Das Umschalten zwischen den in Fig. 2 und den in Fig. 3 gezeigten Zuständen erfolgt alternierend und über ein Öffnen und Schließen der Ventile der jeweiligen Regeneratorkammern 14, 16, 18 und 20, was von einer Steuerung ausgeführt wird.

Es sei bemerkt, dass die Strömungsrichtung für das Rohgas und das gereinigte Gas durch die Regeneratorkammern 14, 16, 18, 20 grundsätzlich auch so eingestellt werden kann, dass der Rohgasstrom zunächst durch die erste und dritte Rohgaskammer 14, 18 oder die zweite und vierte Rohgaskammer 26, 20 oder die erste und zweite Rohgaskammer 14, 16 oder die dritte und vierte Rohgaskammer 18, 20 geführt wird, um die teilweise gereinigten Rohgasströme dann anschließend durch die zweite und vierte Regeneratorkammer 16, 20 oder die erste und dritte Regeneratorkammer 14, 18 oder die dritte und vierte Regeneratorkammer 14, 20 oder die erste und vierte Regeneratorkammer 14, 20 zu führen. Es können für die Anlage grundsätzlich auch noch weitere alternative Verschaltungen und/oder Betriebszustände mit entsprechenden, abweichenden Strömungsrichtungen eingestellt werden, die der Fachmann als zu den vorstehend beschriebenen Anlagen-Einstellungen gleichwirkend erkennt.

Die Steuerung kann dazu mit Einrichtungen zur Erfassung bestimmter Kriterien, wie Werten bezüglich Temperatur, Differenzdrücke, (Abgas-/gereinigter Gas-)Volumenstrom, Schadstoffgehaltkonzentration oder Betriebszustand, einer Anlage 10 verbunden sein. Die Steuerung kann dann, wenn die Kriterien bestimmte Erfordernisse erfüllen oder Grenzwerte überschreiten, die Anlage 10 aus einer normalen Betriebsart (Fig. 1) in die weitere Betriebsart (Fig. 2 und Fig. 3) schalten.

Beispielsweise können in einer Zuführleitung der Anlage 10 Einrichtungen zur Messung eines Druckes in den Leitungen angeordnet sein, so dass die Steuerung die Anlage 10 von einer ersten Betriebsart in eine weitere Betriebsart umschaltet, wenn der Druck in der Zuführleitung einen bestimmten Grenzwert überschreitet. So kann auch die Steuerung den Betrieb der Anlage 10 in der weiteren Betriebsart beenden, wenn der Druck in der Abführleitung oder der Zuführleitung abnimmt. Gleiches gilt für die Schadstoffkonzentration des Gases in der Zuführleitung oder in der Abführleitung oder für Über-und Unterschreiten bestimmter Temperaturen in den Leitungen und/oder Komponenten der Anlage 10, sowie für die Größe der Volumenströme des Rohgases oder gereinigten Gases.

Die Zuführ- und die Abführleitung sind entsprechend dem maximal durchströmenden Gasstromes der Anlage 10 auch in der weiteren Betriebsart auszulegen. Dazu können die Leitungen auch doppelt ausgeführt sein und in der weiteren Betriebsart über Öffnen und Schließen weiterer Ventile ein Gasstrom zwei Leitungen zugeführt werden, wobei in einer normalen Betriebsart das Gas nur durch eine der Leitungen strömt.

Das Umschalten der Zuführung des Rohgasstromes 22 bei der normalen Betriebsart (Fig. 1) und das Zuführen des Rohgasstromes 30 in der weiteren Betriebsart (Fig. 2, Fig. 3) erfolgen in regelmäßigen Abständen, wobei ein Umschalten in der Regel dann erfolgt, wenn die Temperatur der keramischen Wärmetauscher in den jeweiligen Regeneratorkammern 14, 16, 18 und 20, die zum Aufheizen des Rohgasstromes 22, 30 dienen, abnimmt oder unter einen bestimmten Grenzwert sinkt. Dies kann durch Messen der Volumenströme und/oder der Temperaturen erfolgen oder im Vorfeld bestimmt sein, so dass die Steuerung ein Umschalten und ein Öffnen und Schließen der Ventile zu festen Zeitpunkten bzw. Zeitabständen vornimmt.

Vorteilhafterweise wird beim Umschalten von dem weiteren Betrieb/der weiteren Betriebsart in den normalen Betrieb, in welchem der Rohgasstrom 22 nur einer der Regeneratorkammern 14, 16, 18 oder 20 zugeführt wird, berücksichtigt, welche der keramischen Wärmetauscher der Regeneratorkammern 14, 16, 18 und 20 zuvor aufgeheizt wurden, so dass einer der beiden, im weiteren Betrieb zuvor aufgeheizten Regeneratorkammern 14, 16, 18 oder 20 der Rohgasstrom 22 zugeführt wird.

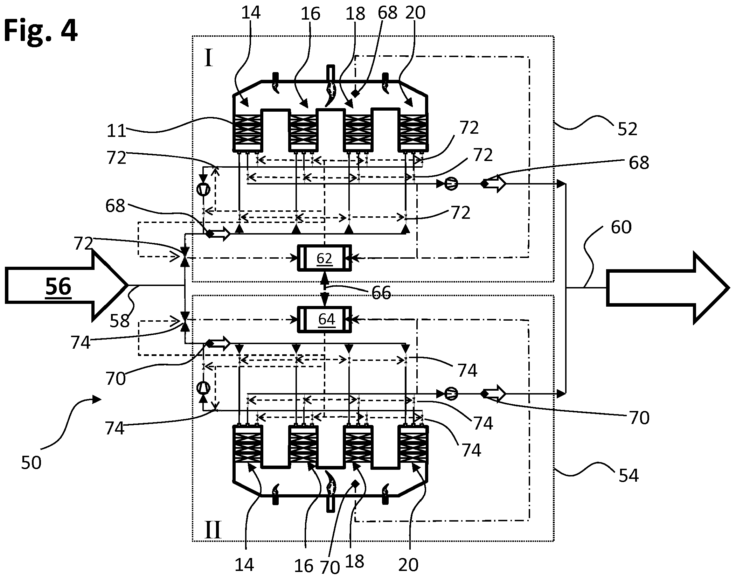

Die Fig. 4 zeigt ein System 50 zur Abluft- oder Abgasreinigung, das eine erste Anlage 52 zur regenerativen thermischen Oxidation und eine zweite Anlage 54 zur regenerativen thermischen Oxidation enthält. Der Aufbau und die Funktion der Anlagen 52, 54 entspricht dabei grundsätzlich dem Aufbau und der Funktion der anhand der Fig. 1 bis Fig. 3 vorstehend beschriebenen Aufbau der Anlage 10. In den Anlagen 52, 54 gibt es jeweils Regeneratorkammern 14, 16, 18, 20 mit einem keramischen Wärmetauscher 11.

Das System 50 erhält zu reinigendes Abgas oder zu reinigende Abluft aus einer Abgasquelle 56 durch eine Abgasleitung 58. Das Abgas bzw. die Abluft wird in dem System 50 in Reingas überführt, das durch eine Reingasleitung 60 freigesetzt wird.

Die Anlagen 52, 54 haben jeweils Steuervorrichtungen 62, 64, die durch einen Datenbus 66 miteinander gekoppelt sind. Die Steuervorrichtungen 62, 64 wirken als Steuerungen und erhalten Messsignale von Messfühlern 68, 70. Aufgrund der Messsignale der Messfühler 68, 70 wird mittels der Steuervorrichtungen 62, 64 der Strömungsweg für das Roh- und Reingas in den Anlagen 52, 54 durch Ansteuern von Ventilen 72, 74 so eingestellt, das die Reinigungsleistung des Systems 50 für die durch die Abgasleitung 58 zugeführte Abluft optimiert ist.

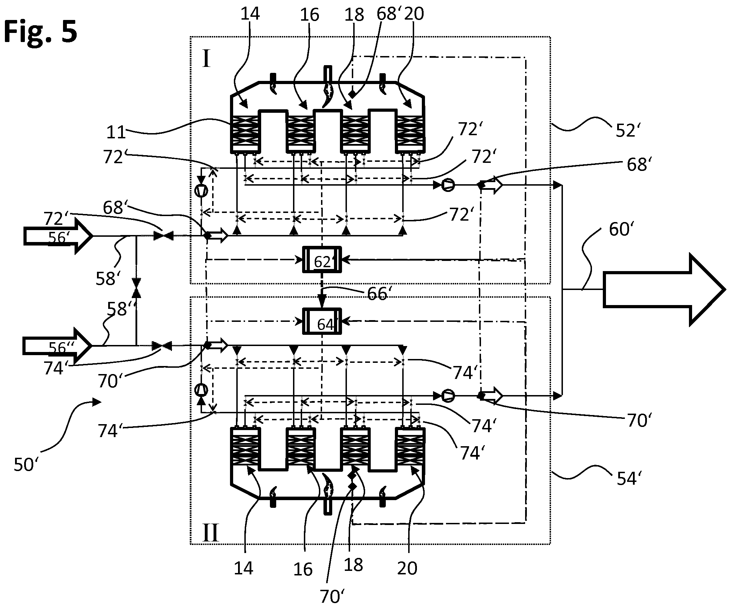

Die Fig. 5 zeigt ein weiteres System 50' zur Abluft- oder Abgasreinigung, das eine erste Anlage 52' zur regenerativen thermischen Oxidation und eine zweite Anlage 54' zur regenerativen thermischen Oxidation enthält. Der Aufbau und die Funktion der Anlagen 52', 54' entspricht auch hier grundsätzlich dem Aufbau und der Funktion der anhand der Fig. 1 bis Fig. 3 vorstehend beschriebenen Aufbau der Anlage 10. In den Anlagen 52', 54' gibt es jeweils Regeneratorkammern 14, 16, 18, 20 mit einem keramischen Wärmetauscher 11.

Das System 50' erhält zu reinigendes Abgas oder zu reinigende Abluft aus zwei unterschiedlichen Abgasquelle 56', 56" durch eine Abgasleitung 58' und eine Abgasleitung 58". Das Abgas bzw. die Abluft wird in dem System 50' in Reingas überführt, das durch eine Reingasleitung 60' freigesetzt wird.

Die Anlagen 52', 54' haben jeweils Steuervorrichtungen 62', 64', die durch einen Datenbus 66' miteinander gekoppelt sind. Auch die Steuervorrichtungen 62', 64' wirken als Steuerungen und erhalten Messsignale von Messfühlern 68', 70'. Aufgrund der Messsignale der Messfühler 68', 70' wird mittels der Steuervorrichtungen 62, 64 der Strömungsweg für das Roh- und Reingas in den Anlagen durch Ansteuern von Ventilen 72', 74' eingestellt. In dem System 50' arbeitet die Steuervorrichtung 62' als eine Mastersteuerung für die Steuervorrichtung 64'. In dem System 50' wird die Anlage 52' als eine Master-Anlage betreiben, die Anlage 54" dagegen als eine Slave-Anlage, deren Betriebsart von der Master-Anlage steuernd beeinflusst wird.

In den Systemen 50, 50' wird der zugeführte Rohgasstrom mittels der Steuervorrichtungen abhängig von dem Betriebszustand der Anlagen 52, 54, 52', 54'aufgeteilt. Der Datenbus 66, 66' ist dabei ein Mittel zur Kommunikation, das die Umschaltung zwischen der Anlage 52, 52' und der Anlage 54. 54', die Umschaltung zwischen der ersten, zweiten oder der weiteren Anlagen-Betriebsart der Anlagen 52, 54, 52', 54' sowie das Steuern eines Modulationsbetriebs der Anlagen in dem System und/oder das Auslösen einer Reinigungsbetriebs in mindestens einer Anlage des Systems ermöglicht.

Es sei bemerkt, dass bei einer modifizierten Ausgestaltung des System 50' vorgesehen sein kann, dass die als Master-Anlage arbeitende Anlage 52' auch auf einige Messfühler 70' in der als Slave-Anlage arbeitenden Anlage 54' zugreift. Darüber hinaus sei bemerkt, das bei einer modifzierten Ausgestaltung des Systems 50' vorgesehen sein kann, dass die Anlagen 52', 54' abwechseln als eine Master-Anlage und eine Slave-Anlage betrieben werden.

Zusammenfassend sind insbesondere folgende bevorzugte Merkmale der Erfindung festzuhalten: Die Erfindung betrifft eine Anlage 10 zur regenerativen thermischen Oxidation sowie ein Verfahren zum Betreiben einer solchen Anlage 10. Die Anlage 10 enthält eine Gruppe von Regeneratorkammern 14, 16, 18, 20 mit mindestens vier Regeneratorkammern, die jeweils einen Wärmetauscher aufweisen und die über Ventile mit einer Zuführleitung zum umschaltbaren Zuführen eines Rohgasstromes 22, 30 und mit einer Abführleitung zum Abführen eines gereinigten Gasstromes 26, 34 sowie einem Spülsystem verbunden sind. In der Anlage 10 gibt es eine Brennkammer mit einem Brennraum 12, über welche die Regeneratorkammern 14, 16, 18, 20 der Gruppe von Regeneratorkammern 13, 16, 18, 20 miteinander verbunden sind. Die Anlage 10 weist eine Steuerung zum Öffnen und Schließen der Ventile auf. Bei dem Betreiben der Anlage 10 wird über die Zuführleitung ein Rohgasstrom 22, 30 zugeführt und über die Abführleitung ein gereinigter Gasstrom 26, 34 abgeführt.

### Bezugszeichenliste

- 10: Anlage
- 12: Brennraum
- 14: erste Regeneratorkammer
- 16: zweite Regeneratorkammer
- 18: dritte Regeneratorkammer
- 20: vierte Regeneratorkammer
- 22: Rohgasstrom
- 26: gereinigter Gasstrom
- 30: Rohgasstrom
- 34: gereinigter Gasstrom
- 36: Spülstrom
- 38: Standby
- 40: Rohgasteilstrom
- 42: gereinigter Gasteilstrom
- 50, 50': System
- 52, 52': Anlage
- 54, 54': Anlage
- 56, 56', 56": Abgasquelle
- 58, 58', 58": Abgasleitung
- 60: System
- 62, 64: Steuervorrichtungen
- 66, 66': Datenbus
- 68, 68': Messfühler
- 70, 70': Messfühler
- 72, 72': Ventile
- 74, 74': Ventile

## Patentansprüche

1. Verfahren zum Betreiben einer Anlage (10) zur regenerativen thermischen Oxidation,
wobei die Anlage (10) eine Gruppe von Regeneratorkammern (14, 16, 18, 20) mit mindestens vier Regeneratorkammern umfasst, die jeweils einen Wärmetauscher aufweisen und die über Ventile mit einer Zuführleitung zum umschaltbaren Zuführen eines Rohgasstromes (22, 30) und mit einer Abführleitung zum Abführen eines gereinigten Gasstromes (26, 34) sowie einem Spülsystem verbunden sind, und wobei die Anlage (10) eine Brennkammer mit einem Brennraum (12) enthält, über welche die Regeneratorkammern (14, 16, 18, 20) der Gruppe von Regeneratorkammern (14, 16, 18, 20) miteinander verbunden sind, und wobei die Anlage (10) eine Steuerung zum Öffnen und Schließen der Ventile aufweist,
bei dem über die Zuführleitung ein Rohgasstrom (22, 30) zugeführt und bei dem über die Abführleitung ein gereinigter Gasstrom (26, 34) abgeführt wird,
wobei in einer ersten Anlagen-Betriebsart der Rohgasstrom (30) aus der Zuführleitung abwechselnd zunächst wenigstens mehreren ersten Regeneratorkammern aus der Gruppe von Regeneratorkammern (16, 18; 14, 20) gleichzeitig und der in diesen Regeneratorkammern (14, 20; 16, 18) gereinigte Gasstrom darauf mehreren zweiten anderen Regeneratorkammern (16, 18; 14, 20) aus der Gruppe der Regeneratorkammern (16, 18; 14, 20) zugeführt wird, und dann der Rohgasstrom (30) gleichzeitig den mehreren zweiten anderen Regeneratorkammern (16, 18; 14, 20) aus der Gruppe der Regeneratorkammern (16, 18; 14, 20) und darauf den mehreren ersten Regeneratorkammern (14, 20; 16, 18) aus der Gruppe der Regeneratorkammern (16, 18; 14, 20) zugeführt wird, und wobei in einer zweiten Anlagen-Betriebsart der Rohgasstrom (22) den Regeneratorkammern (14, 16, 18, 20) abwechselnd zugeführt und der Wärmetauscher der Regeneratorkammern (14, 16, 18,20) abwechselnd von dem Rohgasstrom (22) und dem gereinigten Gasstrom (26) durchströmt wird,
wobei der Rohgasstrom (22) über die Wärmetauscher Wärme aufnimmt und der gereinigte Gasstrom (26) Wärme an die Wärmetauscher abgibt,
wobei in den Regeneratorkammern (14, 16, 18, 20) zumindest teilweise eine Oxidation der in dem Rohgasstrom (22) enthaltenen Schadstoffe und in der Brennkammer (12) eine weitere Oxidation der in dem erwärmten, teilweise gereinigten Rohgasstrom enthaltenen Schadstoffe erfolgt,
wobei in dem Spülsystem bei einem Umschalten der Zuführung des Rohgasstromes (22) Spülgas über eine der Regeneratorkammern (14; 16; 18; 20) geführt wird, welcher vorher Rohgas aus der Zuführleitung zugeführt wurde,
wobei der Rohgasstrom (22) über die Zuführleitung in eine erste vorgewärmte Regeneratorkammer (14) geleitet wird, um das Rohgas zu erwärmen, und anschließend das gereinigte Gas einer zweiten Regeneratorkammer (16) zugeführt wird, um diese für eine nachfolgende Abgasreinigung vorzuwärmen, und
wobei das gereinigte Gas nach dem Austritt aus der zweiten Regeneratorkammer (16) über die Abführleitung aus der Anlage (10) herausgeführt wird.

2. Verfahren nach Anspruch 1, **gekennzeichnet durch** eine vierte Regeneratorkammer (20), die während der zweiten Anlagen-Betriebsart in einem Wartemodus betrieben wird.

3. Verfahren nach Anspruch 1 oder 2, **dadurch gekennzeichnet, dass** zwischen der ersten Anlagen-Betriebsart und der zweiten Anlagen-Betriebsart in regelmäßigen Zeitabständen umgeschaltet wird.

4. Verfahren nach einem der Ansprüche 1 bis 3, **dadurch gekennzeichnet, dass** in der zweiten Anlagen-Betriebsart wenigstens eine Regeneratorkammer, insbesondere die vierte Regeneratorkammer (20) durch Verdampfen und/oder Verbrennen von festen und flüssigen Bestandteilen der Schadstoffe, die sich an den Wärmetauschern ablagern, gereinigt wird.

5. Verfahren nach Anspruch 4, **dadurch gekennzeichnet, dass** das Reinigen der wenigstens einen Regeneratorkammer (20) in regelmäßigen Zeitabständen und/oder in Abhängigkeit einer Zustandsgröße der Regeneratorkammer (20), insbesondere einer Druckdifferenz und/oder Temperaturdifferenz und/oder Volumenstromdifferenz und/oder Schadstoffbeladung zwischen der Zuführungsleitung und dem Eingang in den Brennraum durchgeführt wird.

6. Verfahren nach einem der Ansprüche 1 bis 5, **dadurch gekennzeichnet, dass** der durch die Zufuhrleitung zugeführte Rohgasvolumenstrom in der ersten Betriebsart doppelt so groß ist wie in der zweiten Betriebsart, und/oder
dass in der ersten Anlagen-Betriebsart eine über Ventile mit der Abführ- und der Zuführleitung sowie dem Spülsystem und über die Brennkammer (12) mit den Regeneratorkammern der Gruppe von Regeneratorkammern (14, 16, 18, 20) verbundene fünfte Regeneratorkammer gereinigt wird, und/oder dass in der zweiten Anlagen-Betriebsart vier Regeneratorkammern aus der Gruppe der Regeneratorkammern (14, 16, 18, 20) in einer Reihenschaltung bereitgestellt werden, wobei der Rohgasstrom (30) abwechselnd von der ersten Regeneratorkammer in die zweite Regeneratorkammer und von der dritten Regeneratorkammer in die vierte Regeneratorkammer oder umgekehrt von der zweiten Regeneratorkammer in die erste Regeneratorkammer und von der vierten Regeneratorkammer in die dritte Regeneratorkammer geleitet wird, und/oder
dass in der ersten Anlagen-Betriebsart die Regeneratorkammern aus der Gruppe der Regeneratorkammern (14, 16, 18, 20) in einer Reihenschaltung bereitgestellt werden, wobei der Rohgasstrom (30) abwechselnd zwei in der Reihenschaltung außenliegenden (14, 20) und in der Reihenschaltung innenliegenden Regeneratorkammern (16, 18) zugeführt wird, und wobei das gereinigte Gas abwechselnd zu den zwei in der Reihenschaltung innenliegenden Regeneratorkammern (16, 18) und den zwei in der Reihenschaltung außenliegenden Regeneratorkammern (14, 20) strömt und von dort zu der Abführleitung gelangt.

7. Verfahren nach einem der Ansprüche 1 bis 6, **dadurch gekennzeichnet, dass** die Anlage (10) in der ersten Anlagen-Betriebsart betrieben wird, wenn bestimmte, insbesondere mit Mitteln zum Erfassen von Kriterien aus der Gruppe Betriebszustand, Zustandsgrößen der Anlage oder von Teilen der Anlage erfasste oder aus diesen abgeleitete Kriterien erfüllt werden.

8. Verfahren nach Anspruch 7, **dadurch gekennzeichnet, dass** die bestimmten Kriterien den Betriebszustand weiterer Anlagen zur regenerativen thermischen Oxidation in einem Anlagenverbund, den (Rohgas-/gereinigten Gas-)Volumenstrom, die Konzentration der Schadstoffe in dem Rohgas, die Größe des Rohgasstromes von einer Einrichtung, von welcher der Rohgasstrom (22; 30) der Anlage (10) zugeführt wird, und/oder die Temperatur in Bereichen der Anlage (10) umfassen.

9. Anlage zur Abgasreinigung mittels regenerativer thermischer Oxidation umfassend mindestens vier Regeneratorkammern (14, 16, 18, 20), die über Ventile mit einer Zuführleitung zum Zuführen eines Rohgasstromes (30) und einer Abführleitung zum Abführen eines gereinigten Gasstromes sowie einem Spülsystem verbunden sind, und eine Brennkammer (12), über die die Regeneratorkammern (14, 16, 18, 20) miteinander verbunden sind, **gekennzeichnet durch** eine Steuerung zum Öffnen und Schließen der Ventile, die neben einem Normallastbetrieb zumindest eine zusätzliche Betriebsart, insbesondere einen Überlast- oder Notbetrieb, nach einem Verfahren der Ansprüche 1 bis 8 vorsieht oder bereitstellt.

10. Anlage nach Anspruch 9, **dadurch gekennzeichnet, dass** die Wärmetauscher keramische Wärmetauscher sind, die eine wabenförmige Struktur und/oder eine Vielzahl von sich durch den Wärmetauscher erstreckenden Öffnungen aufweisen.

11. Anlage nach Anspruch 9 oder 10 **dadurch gekennzeichnet, dass** die Steuerung mit Mitteln zum Erfassen von Kriterien aus der Gruppe Betriebszustand, Zustandsgrößen der jeweiligen Anlage oder von Anlagenteilen weiterer Anlagen zur regenerativen thermischen Oxidation in einem Anlagenverbund, Rohgas- und/oder gereinigter Gas-Volumenstrom, Konzentration der Schadstoffe in dem Rohgas, Größe des Rohgasstromes von einer Einrichtung, von welcher der Rohgasstrom (22; 30) der Anlage (10) zugeführt wird, die Temperatur in Bereichen der Anlage (10) verbunden ist, welche in der Zuführ-, Abführleitung und/oder anderen Komponenten der Anlage (10) angeordnet sind, wobei die Steuerung die Ventile der Regeneratorkammern (14, 16, 18, 20) in Abhängigkeit der Kriterien derart steuert, dass die Anlage (10) in einer Normallast-Betriebsart oder einer Überlast-Betriebsart betrieben wird.

12. Anlage nach Anspruch 11, **gekennzeichnet durch** Messeinrichtungen als Mittel zur Erfassung von Volumenströmen, Temperaturen, Differenzdrücken und/oder Konzentrationen an Schadstoffen, wobei die Steuerung die erfasste Zustandsgröße mit programmierbaren Sollwerten vergleicht und bei einer Über- und/oder Unterschreitung der Sollwerte die zusätzliche Betriebsart aktiviert oder deaktiviert.

13. Anlage nach Anspruch 11 oder 12, **dadurch gekennzeichnet, dass** mindestens ein Mittel zur Erfassung oder Bestimmung zumindest einer Zustandsgröße als Kriterium für das Umschalten einer Betriebsart der Anlage durch die Steuerung ausgewertet wird.

14. System (50, 50') zur Abluft- oder Abgasreinigung umfassend mindestens zwei Anlagen (52, 54, 52', 54') nach einem der Ansprüche 9 bis 13, wobei die Steuerung (62, 64, 62', 64') jeder Anlage auf Mittel (68, 70, 68', 70') zur Erfassung eines Betriebszustandes, einer Zustandsgröße der Anlage oder von Anlagenteilen der jeweils anderen Anlagen zugreift und für eine Aktivierung der zusätzlichen Betriebsart der jeweiligen Anlage auswertet, wobei vorzugsweise eine der Anlagen (52') als Masteranlage betrieben wird.

15. System nach Anspruch 14, **dadurch gekennzeichnet, dass** Mittel zur Kommunikation zwischen den Steuerungen (62, 64, 62', 64') der Anlagen (52', 54') im System (50') vorgesehen sind, wobei vorzugweise eine Abgleicheinheit mit den Steuerungen verbunden oder in wenigstens einer Steuerung vorgesehen ist, welche einen dem System zugeführten Rohgasstrom abhängig vom Betriebszustand der Anlagen im System auf die jeweiligen Anlagen aufteilt und/oder die Umschaltung zwischen der ersten, zweiten oder weiteren Anlagen-Betriebsart sowie dem Modulationsbetrieb der Anlagen im System steuert und/oder den Reinigungsbetrieb in mindestens einer Anlage des Systems auslöst, und/oder
dass die Anlagen (52, 54) über eine gemeinsame Rohgasleitung (58) mit einer das Rohgas bereitstellende Emissionsquelle verbunden sind.

## Claims

1. Method for operating a plant (10) for regenerative thermal oxidation,
wherein the plant (10) comprises a group of regenerator chambers (14, 16, 18, 20) with at least four regenerator chambers which in each case have a heat exchanger and which are connected via valves to a feed line for switchably feeding a crude gas flow (22, 30) and to a discharge line for discharging a cleaned gas flow (26, 34) and also to a flushing system, and wherein the plant (10) contains a combustion chamber which has a combustion space (12) and via which the regenerator chambers (14, 16, 18, 20) of the group of regenerator chambers (14, 16, 18, 20) are connected to one another, and wherein the plant (10) has a controller for opening and closing the valves,
in which method a crude gas flow (22, 30) is fed via the feed line, and in which method a cleaned gas flow (26, 34) is discharged via the discharge line,
wherein, in a first plant operating mode, the crude gas flow (30) is fed from the feed line in an alternating manner firstly to at least multiple first regenerator chambers of the group of regenerator chambers (16, 18; 14, 20) simultaneously and the gas flow cleaned in these regenerator chambers (14, 20; 16, 18) is subsequently fed to multiple second other regenerator chambers (16, 18; 14, 20) of the group of regenerator chambers (16, 18; 14, 20), and then the crude gas flow (30) is fed simultaneously to the multiple second other regenerator chambers (16, 18; 14, 20) of the group of regenerator chambers (16, 18; 14, 20) and subsequently to the multiple first regenerator chambers (14, 20; 16, 18) of the group of regenerator chambers (16, 18; 14, 20), and wherein, in a second plant operating mode, the crude gas flow (22) is fed in an alternating manner to the regenerator chambers (14, 16, 18, 20) and the heat exchanger of the regenerator chambers (14, 16, 18, 20) is flowed through in an alternating manner by the crude gas flow (22) and the cleaned gas flow (26),
wherein the crude gas flow (22) absorbs heat via the heat exchangers, and the cleaned gas flow (26) releases heat to the heat exchangers,
wherein oxidation of the pollutants contained in the crude gas flow (22) occurs at least partially in the regenerator chambers (14, 16, 18, 20), and further oxidation of the pollutants contained in the heated, partially cleaned crude gas flow occurs in the combustion chamber (12),
wherein, in the flushing system, flushing gas is passed via one of the regenerator chambers (14; 16; 18; 20), to which chamber crude gas was previously fed from the feed line, during a switchover of the feeding of the crude gas flow (22),
wherein the crude gas flow (22) is directed via the feed line into a first pre-heated regenerator chamber (14) in order to heat the crude gas, and then the cleaned gas is fed to a second regenerator chamber (16) in order to preheat the latter for subsequent exhaust-gas treatment, and
wherein the cleaned gas is passed out of the plant (10) via the discharge line after exiting the second regenerator chamber (16).

2. Method according to Claim 1, **characterized by** a fourth regenerator chamber (20), which is operated in a waiting mode during the second plant operating mode.

3. Method according to Claim 1 or 2, **characterized in that** a switchover between the first plant operating mode and the second plant operating mode occurs at regular time intervals.

4. Method according to one of Claims 1 to 3, **characterized in that,** in the second plant operating mode, at least one regenerator chamber, in particular the fourth regenerator chamber (20), is cleaned by way of vaporization and/or combustion of solid and liquid constituents of the pollutants which are deposited on the heat exchangers.

5. Method according to Claim 4, **characterized in that** the cleaning of the at least one regenerator chamber (20) is carried out at regular time intervals and/or in dependence on a state variable of the regenerator chamber (20), in particular a pressure difference and/or temperature difference and/or volume flow difference and/or pollutant loading between the feed line and the inlet into the combustion space.

6. Method according to one of Claims 1 to 5, **characterized in that** the crude gas volume flow fed through the feed line is twice as large in the first operating mode as in the second operating mode, and/or
**in that**, in the first plant operating mode, a fifth regenerator chamber, which is connected via valves to the discharge line and feed line and also to the flushing system and via the combustion chamber (12) to the regenerator chambers of the group of regenerator chambers (14, 16, 18, 20), is cleaned, and/or **in that**, in the second plant operating mode, four regenerator chambers of the group of regenerator chambers (14, 16, 18, 20) are provided in a series circuit, wherein the crude gas flow (30) is directed in an alternating manner from the first regenerator chamber into the second regenerator chamber and from the third regenerator chamber into the fourth regenerator chamber or, conversely, from the second regenerator chamber into the first regenerator chamber and from the fourth regenerator chamber into the third regenerator chamber, and/or in that, in the first plant operating mode, the regenerator chambers of the group of regenerator chambers (14, 16, 18, 20) are provided in a series circuit, wherein the crude gas flow (30) is fed in an alternating manner to two regenerator chambers which are external (14, 20) in the series circuit and two regenerator chambers (16, 18) which are internal in the series circuit, and wherein the cleaned gas flows in an alternating manner to the two regenerator chambers (16, 18) which are internal in the series circuit and to the two regenerator chambers (14, 20) which are external in the series circuit, and passes from there to the discharge line.

7. Method according to one of Claims 1 to 6, **characterized in that** the plant (10) is operated in the first plant operating state if specific criteria, in particular criteria detected by means for detecting criteria from the group operating state, state variables of the plant or of parts of the plant, or criteria derived therefrom, are satisfied.

8. Method according to Claim 7, **characterized in that** the specific criteria comprise the operating state of further plants for regenerative thermal oxidation in an integrated set of plants, the (crude gas/cleaned gas) volume flow, the concentration of pollutants in the crude gas, the size of the crude gas flow from a device from which the crude gas flow (22; 30) is fed to the plant (10), and/or the temperature in regions of the plant (10).

9. Plant for cleaning exhaust gas by means of regenerative thermal oxidation, comprising at least four regenerator chambers (14, 16, 18, 20) which are connected via valves to a feed line for feeding a crude gas flow (30) and to a discharge line for discharging a cleaned gas flow and also to a flushing system, and comprising a combustion chamber (12) via which the regenerator chambers (14, 16, 18, 20) are connected to one another, **characterized by** a controller which serves for opening and closing the valves and which provides, apart from normal-load operation, at least one additional operating mode, in particular overload operation or emergency operation, according to a method of Claims 1 to 8.

10. Plant according to Claim 9, **characterized in that** the heat exchangers are ceramic heat exchangers which have a honeycomb-shaped structure and/or a multiplicity of openings extending through the heat exchanger.

11. Plant according to Claim 9 or 10, **characterized in that** the controller is connected to means for detecting criteria from the group operating state, state variables of the respective plant or of plant parts of further plants for regenerative thermal oxidation in an integrated set of plants, crude gas volume flow and/or cleaned gas volume flow, concentration of pollutants in the crude gas, size of the crude gas flow from a device from which the crude gas flow (22; 30) is fed to the plant (10), the temperature in regions of the plant (10), which means are arranged in the feed line, discharge line and/or in other components of the plant (10), wherein the controller controls the valves of the regenerator chambers (14, 16, 18, 20) in dependence on the criteria in such a way that the plant (10) is operated in a normal-load operating mode or in an overload operating mode.

12. Plant according to Claim 11, **characterized by** measurement devices as means for detecting volume flows, temperatures, differential pressures and/or concentrations of pollutants, wherein the controller compares the detected state variable with programmable target values and, in the case of the target values being overshot and/or undershot, activates or deactivates the additional operating mode.

13. Plant according to Claim 11 or 12, **characterized in that** at least one means for detecting or determining at least one state variable as a criterion for the switchover of an operating mode of the plant is evaluated by the controller.

14. System (50, 50') for cleaning exhaust air or exhaust gas, comprising at least two plants (52, 54, 52', 54') according to one of Claims 9 to 13, wherein the controller (62, 64, 62', 64') of each plant accesses means (68, 70, 68', 70') for detecting an operating state, a state variable of the plant or of plant parts of the in each case other plants and evaluates for an activation of the additional operating mode of the respective plant, wherein one of the plants (52') is preferably operated as the master plant.

15. System according to Claim 14, **characterized in that** means for communicating between the controllers (62, 64, 62', 64') of the plants (52', 54') in the system (50') are provided, wherein preferably an adjustment unit is connected to the controllers or is provided in at least one controller, which unit divides, a crude gas flow, fed to the system, between the respective plants depending on the operating state of the plants in the system, and/or controls the switchover between the first, second or further plant operating mode and the modulation operation of the plants in the system, and/or triggers the cleaning operation in at least one plant of the system, and/or
**in that** the plants (52, 54) are connected via a common crude gas line (58) to an emission source providing the crude gas.

## Revendications

1. Procédé de conduite d'une installation d'oxydation thermique régénérative (10),
dans lequel l'installation (10) comprend un groupe de chambres de régénérateur (14, 16, 18, 20) avec au moins quatre chambres de régénérateur, qui présentent chacune un échangeur de chaleur et qui sont raccordées par des soupapes à une conduite d'alimentation pour l'alimentation commutable d'un courant de gaz brut (22, 30) et à une conduite d'évacuation pour évacuer un courant de gaz purifié (26, 34) ainsi qu'à un système de purge, et dans lequel l'installation (10) comporte une chambre de combustion avec un foyer (12), par laquelle les chambres de régénérateur (14, 16, 18, 20) du groupe de chambres de régénérateur (14, 16, 18, 20) sont reliées l'une à l'autre, et dans lequel l'installation (10) présente une commande pour l'ouverture et la fermeture des soupapes,
dans lequel on fournit un courant de gaz brut (22, 30) par la conduite d'alimentation et dans lequel on évacue un courant de gaz purifié (26, 34) par la conduite d'évacuation,
dans lequel, dans un premier mode de fonctionnement de l'installation, on envoie le courant de gaz brut (30) à partir de la conduite d'alimentation alternativement d'abord à au moins plusieurs premières chambres de régénérateur du groupe de chambres de régénérateur (16, 18; 14, 20) simultanément et ensuite le courant de gaz purifié dans ces chambres de régénérateur (14, 20; 16, 18) à plusieurs deuxièmes autres chambres de régénérateur (16, 18; 14, 20) du groupe de chambres de régénérateur (16, 18; 14, 20), et on envoie ensuite le courant de gaz brut (30) simultanément aux plusieurs deuxièmes autres chambres de régénérateur (16, 18; 14, 20) du groupe des chambres de régénérateur (16, 18; 14, 20) et ensuite aux plusieurs premières chambres de régénérateur (14, 20; 16, 18) du groupe de chambres de régénérateur (16, 18; 14, 20), et dans lequel, dans un deuxième mode de fonctionnement de l'installation, on envoie le courant de gaz brut (22) alternativement aux chambres de régénérateur (14, 16, 18, 20) et l'échangeur des chambres de régénérateur (14, 16, 18, 20) est parcouru alternativement par le courant de gaz brut (22) et par le courant de gaz purifié (26),
dans lequel le courant de gaz brut (22) reçoit de la chaleur par les échangeurs de chaleur et le courant de gaz purifié (26) cède de la chaleur aux échangeurs de chaleur,
dans lequel il se produit dans les chambres de régénérateur (14, 16, 18, 20) au moins partiellement une oxydation des polluants contenus dans le courant de gaz brut (22) et dans la chambre de combustion (12) une nouvelle oxydation des polluants contenus dans le courant de gaz brut chauffé partiellement purifié,
dans lequel on fournit dans le système de purge, lors d'une commutation de la fourniture du courant de gaz brut (22), un gaz de purge via une des chambres de régénérateur (14; 16; 18; 20), à laquelle on a auparavant envoyé du gaz brut à partir de la conduite d'alimentation,
dans lequel le courant de gaz brut (22) est conduit par la conduite d'alimentation à une première chambre de régénérateur préchauffée (14), afin de chauffer le gaz brut, et le gaz purifié est envoyé à une deuxième chambre de régénérateur (16), afin de la préchauffer en vue d'une prochaine purification de gaz d'échappement et
dans lequel on conduit le gaz purifié hors de l'installation (10) après la sortie de la deuxième chambre de régénérateur (16) via la conduite d'évacuation.

2. Procédé selon la revendication 1, **caractérisé par** une quatrième chambre de régénérateur (20), qui fonctionne dans un mode d'attente pendant le deuxième mode de fonctionnement de l'installation.

3. Procédé selon la revendication 1 ou 2, **caractérisé en ce que** l'on opère la commutation entre le premier mode de fonctionnement et le deuxième mode de fonctionnement à des intervalles de temps réguliers.

4. Procédé selon l'une quelconque des revendications 1 à 3, **caractérisé en ce que**, dans le deuxième mode de fonctionnement de l'installation, au moins une chambre de régénérateur, en particulier la quatrième chambre de régénérateur (20), est purifiée par vaporisation et/ou combustion de composants solides et liquides des polluants, qui se déposent sur les échangeurs de chaleur.

5. Procédé selon la revendication 4, **caractérisé en ce que** l'on effectue la purification de ladite au moins une chambre de régénérateur (20) à des intervalles de temps réguliers et/ou en fonction d'une grandeur d'état de la chambre de régénérateur (20), en particulier d'une différence de pression et/ou d'une différence de température et/ou d'une différence de flux volumétrique et/ou d'une charge de polluants entre la conduite d'alimentation et l'entrée dans le foyer.

6. Procédé selon l'une quelconque des revendications 1 à 5, **caractérisé en ce que** le flux volumétrique de gaz brut fourni par la conduite d'alimentation dans le premier mode de fonctionnement est deux fois plus élevé que dans le deuxième mode de fonctionnement, et/ou
**en ce que**, dans le premier mode de fonctionnement de l'installation, on purifie une cinquième chambre de régénérateur reliée par des soupapes à la conduite d'évacuation et à la conduite d'alimentation ainsi qu'au système de purge et par la chambre de combustion (12) aux chambres de régénérateur du groupe de chambres de régénérateur (14, 16, 18, 20), et/ou **en ce que**, dans le deuxième mode de fonctionnement de l'installation, on prépare quatre chambres de régénérateur du groupe de chambres de régénérateur (14, 16, 18, 20) en un montage en série, dans lequel le courant de gaz brut (30) est conduit alternativement de la première chambre de régénérateur à la deuxième chambre de régénérateur et de la troisième chambre de régénérateur à la quatrième chambre de régénérateur ou inversement de la deuxième chambre de régénérateur à la première chambre de régénérateur et de la quatrième chambre de régénérateur à la troisième chambre de régénérateur, et/ou
**en ce que**, dans le premier mode de fonctionnement de l'installation, les chambres de régénérateur du groupe des chambres de régénérateur (14, 16, 18, 20) sont préparées en un montage en série, dans lequel le courant de gaz brut (30) est envoyé alternativement à deux chambres de régénérateur (14, 20) situées à l'extérieur dans le montage en série et à deux chambres de régénérateur (16, 18) situées à l'intérieur dans le montage en série, et dans lequel le gaz purifié circule alternativement vers les deux chambres de régénérateur (16, 18) situées à l'intérieur dans le montage en série et vers les deux chambres de régénérateur (14, 20) situées à l'extérieur dans le montage en série et arrive à partir de celles-ci à la conduite d'évacuation.

7. Procédé selon l'une quelconque des revendications 1 à 6, **caractérisé en ce que** l'on fait fonctionner l'installation (10) dans le premier mode de fonctionnement de l'installation, lorsque des critères déterminés, en particulier des critères détectés avec des moyens de détection de critères du groupe état de fonctionnement, grandeurs d'état de l'installation ou de parties de l'installation, ou déduits de ceux-ci, sont remplis.

8. Procédé selon la revendication 7, **caractérisé en ce que** les critères déterminés comprennent l'état de fonctionnement d'autres installations d'oxydation thermique régénérative dans une installation combinée, le flux volumétrique (de gaz brut/de gaz purifié), la concentration des polluants dans le gaz brut, la grandeur du courant de gaz brut depuis un dispositif, à partir duquel le courant de gaz brut (22; 30) est envoyé à l'installation (10) et/ou la température dans des régions de l'installation (10).

9. Installation pour la purification de gaz d'échappement par oxydation thermique régénérative comprenant au moins quatre chambres de régénérateur (14, 16, 18, 20), qui sont raccordées par des soupapes à une conduite d'alimentation pour l'alimentation d'un courant de gaz brut (30) et à une conduite d'évacuation pour évacuer un courant de gaz purifié ainsi qu'à un système de purge, et une chambre de combustion (12), par laquelle les chambres de régénérateur (14, 16, 18, 20) sont reliées l'une à l'autre, **caractérisée par** une commande pour l'ouverture et la fermeture des soupapes, qui prévoit ou prépare, en plus d'un fonctionnement à charge normale, au moins un mode de fonctionnement supplémentaire, en particulier un fonctionnement en surcharge ou de secours, suivant un procédé selon l'une quelconque des revendications 1 à 8.

10. Installation selon la revendication 9, **caractérisée en ce que** les échangeurs de chaleur sont des échangeurs de chaleur céramiques, qui présentent une structure alvéolaire et/ou une multiplicité d'ouvertures s'étendant à travers l'échangeur de chaleur.

11. Installation selon la revendication 9 ou 10, **caractérisée en ce que** la commande est reliée à des moyens pour détecter des critères du groupe état de fonctionnement, grandeurs d'état de l'installation respective ou de parties d'installation d'autres installations d'oxydation thermique régénérative dans une installation combinée, flux volumétrique de gaz brut et/ou de gaz purifié, concentration des polluants dans le gaz brut, grandeur du courant de gaz brut depuis un dispositif à partir duquel le courant de gaz brut (22; 30) est envoyé à l'installation (10), la température dans des régions de l'installation (10), qui sont disposés dans la conduite d'alimentation, la conduite d'évacuation et/ou d'autres composants de l'installation (10), dans laquelle la commande commande les soupapes des chambres de régénérateur (14, 16, 18, 20) en fonction des critères, de telle manière que l'installation (10) fonctionne dans un mode de fonctionnement à charge normale ou dans un mode de fonctionnement en surcharge.

12. Installation selon la revendication 11, **caractérisée par** des dispositifs de mesure comme moyens de détection de flux volumétriques, de températures, de pressions différentielles et/ou de concentrations de polluants, dans laquelle la commande compare les grandeurs d'état détectées avec des valeurs de seuil programmables et active ou désactive le mode de fonctionnement supplémentaire en cas de franchissement à la hausse et/ou à la baisse des valeurs de seuil.

13. Installation selon la revendication 11 ou 12, **caractérisée en ce qu'**au moins un moyen de détection ou de détermination d'au moins une grandeur d'état comme critère pour la commutation d'un mode de fonctionnement de l'installation est évalué par la commande.

14. Système (50, 50') pour la purification d'air d'échappement ou de gaz d'échappement comprenant au moins deux installations (52, 54, 52', 54') selon l'une quelconque des revendications 9 à 13, dans lequel la commande (62, 64, 62', 64') de chaque installation accède à des moyens (68, 70, 68', 70') de détection d'un état de fonctionnement, d'une grandeur d'état de l'installation ou de parties d'installation des autres installations respectives et les évalue en vue d'une activation du mode de fonctionnement supplémentaire de l'installation respective, dans lequel on fait de préférence fonctionner une des installations (52') comme installation maître.

15. Système selon la revendication 14, **caractérisé en ce qu'**il est prévu dans le système (50') des moyens de communication entre les commandes (62, 64, 62', 64') des installations (52', 54'), dans lequel de préférence une unité d'équilibrage est raccordée aux commandes ou est prévue dans au moins une commande, laquelle répartit un courant de gaz brut fourni au système sur les installations respectives dans le système en fonction de l'état de fonctionnement des installations et/ou commande la commutation entre le premier, le deuxième ou un autre mode de fonctionnement de l'installation et le fonctionnement de modulation des installations dans le système et/ou déclenche le fonctionnement de purification dans au moins une installation du système, et/ou
**en ce que** les installations (52, 54) sont connectées par une conduite de gaz brut commune (58) à une source d'émission fournissant le gaz brut.
